# EUROPEAN PATENT APPLICATION

(11) **EP 4 057 658 A1**
(43) Date of publication of application: **14.09.2022**
(21) Application number: 20896212.6
(22) Date of filing: 28.10.2020
(51) Int. Cl.: H04W 12/00

(54) **MACHINE-CARD VERIFICATION METHOD APPLIED TO MINIMALIST NETWORK, AND RELATED DEVICE**

(30) Priority: 05.12.2019 CN 201911234613
(71) Applicant: Huawei Technologies Co., Ltd., Shenzhen, Guangdong 518129 (CN)
(72) Inventor: ZENG, Zhengyang, Shenzhen, Guangdong 518129 (CN); LI, Shikun, Shenzhen, Guangdong 518129 (CN); HU, Li, Shenzhen, Guangdong 518129 (CN); JIN, Weisheng, Shenzhen, Guangdong 518129 (CN)
(74) Representative: MERH-IP Matias Erny Reichl Hoffmann Patentanwälte PartG mbB
(86) International application number: PCT/CN2020/124204
(87) International publication number: WO 2021/109753

(57) **Abstract**

A machine-card verification method applied to a simplified network includes: WBCPE sends a registration request to a WBAP. The WBAP generates an IMEI request indication based on the registration request. The WBAP sends the IMEI request indication to the WBCPE. The WBCPE responds to the IMEI request indication, and sends an IMEI and first SIM card information to a WBAC through the WBAP. The first SIM card information includes at least one of the following information: an international mobile subscriber identity IMSI, a network access identifier NAI, and a certificate name. The WBAC verifies the IMEI and the first SIM card information based on preset binding information. In the machine-card verification method, the IMEI and the SIM card information are verified, to reduce a risk that a SIM card is stolen and improve security of a simplified network. This application further provides a related device that can implement the foregoing method.

## Description

This application claims priority to Chinese Patent Application No. 201911234613.0, filed with the China National Intellectual Property Administration on December 5, 2019 and entitled "MACHINE-CARD VERIFICATION METHOD APPLIED TO SIMPLIFIED NETWORK AND RELATED DEVICE", which is incorporated herein by reference in its entirety.

### TECHNICAL FIELD

This application relates to the field of communications technologies, and in particular, to a machine-card verification method applied to a simplified network and a related device.

### BACKGROUND

With development of communications technologies, network architecture becomes more complex. To reduce network complexity, a simplified network is proposed currently.

In the simplified network, a wireless wideband access point controller (wideband access point controller, WBAC) may configure a wireless wideband access point (wideband access point, WBAP), and wireless wideband customer premises equipment (wideband customer premises equipment, WBCPE) may perform signaling interaction with the WBAP and the WBAC, to implement an online subscription procedure.

In actual application, after subscriber identity module (subscriber identity module, SIM) card information is stolen, illegal user equipment may use the SIM card information to access the simplified network. Consequently, a security risk exists in the simplified network.

### SUMMARY

In view of this, this application provides a machine-card verification method applied to a simplified network, to verify WBCPE and a SIM card in the simplified network, thereby reducing a problem that the SIM card is stolen and improving security of the SIM card.

According to a first aspect, a machine-card verification method applied to a simplified network is provided. In the method, WBCPE sends a registration request to a WBAP. Then, the WBAP generates an IMEI request indication based on the registration request, and sends the IMEI request indication to the WBCPE. The WBCPE responds to the IMEI request indication, and sends an IMEI and first SIM card information to a WBAC through the WBAP. Then, the WBAC verifies the IMEI and the first SIM card information based on preset binding information. The IMEI is the international mobile equipment identity of the WBCPE. The first SIM card information is the SIM card information currently configured for the WBCPE. The SIM card information includes at least one of the following information: an international mobile subscriber identity IMSI, a NAI, and a certificate name. The preset binding information includes a correspondence between the IMEI and a preset SIM card.

In this implementation, the WBAC may verify the IMEI and the first SIM card information from the WBCPE based on the preset binding information. When the IMEI and the first SIM card information are inconsistent with the preset binding information, the WBAC determines that the WBCPE does not match the first SIM card information, which indicates that the first SIM card information is not valid SIM card information of the WBCPE. In this case, registration is rejected. The WBCPE cannot access the simplified network by using a first SIM card. Therefore, a risk that a SIM card is stolen can be reduced, and security of the simplified network can be improved. In addition, the SIM card information includes the IMSI, the NAI, the certificate name, or a combination thereof. In this way, verification reliability can be improved.

In a possible implementation, before the WBCPE sends the registration request to the WBAP, the WBCPE binds preconfigured SIM card information to the IMEI. The WBCPE sends the binding information of the SIM card information and the IMEI to the WBAC through the WBAP, so that the WBAC stores the binding information of the SIM card information and the IMEI. The preconfigured SIM card information and the IMEI are both valid SIM card information and a valid IMEI. In this implementation, before verifying the IMEI and the first SIM card information, the WBAC may obtain, from the WBCPE, the binding information of the valid IMEI and the valid SIM card information, and store the binding information in the WBAC.

In another possible implementation, after binding the IMEI and the SIM card information, the WBAC allocates the IMEI and the SIM card information to the WBCPE, and the WBCPE initiates a registration request based on the allocated IMEI and the allocated SIM card information.

In another possible implementation, after the WBAC determines that the first SIM card information does not match the WBCPE, the WBAC sends a verification failure message to the WBAP. The verification failure message is used to indicate that the first SIM card information does not match the WBCPE. The WBAP may generate a registration reject message based on the verification failure message, and send the registration reject message to the WBCPE, to indicate that the first SIM card information does not match the WBCPE.

In another possible implementation, the IMEI request indication is carried in a security mode command, and the IMEI and the first SIM card information are both carried in a security mode complete message. In this implementation, the IMEI and the first SIM card information are obtained in a NAS SMC process, thereby providing a specific implementation.

According to a second aspect, a machine-card verification method applied to a simplified network is provided. In this method, a wireless wideband access point controller WBAC receives an IMEI and first SIM card information that are sent by a WBAP. The WBAC determines, based on preset binding information, second SIM card information corresponding to the IMEI. When the first SIM card information is the same as the second SIM card information, the WBAC determines that the first SIM card information matches WBCPE. When the first SIM card information is different from the second SIM card information, the WBAC determines that the first SIM card information does not match the WBCPE. The preset binding information includes a correspondence between an IMEI and SIM card information. In this implementation, when the IMEI and the first SIM card information are inconsistent with the preset binding information, the WBAC determines that the WBCPE does not match the first SIM card information, which indicates that the first SIM card information is not valid SIM card information of the WBCPE. In this case, registration is rejected. The WBCPE cannot access the simplified network by using a first SIM card. Therefore, a risk that a SIM card is stolen can be reduced, and security of the simplified network can be improved.

In a possible implementation, before the WBAC receives the IMEI and the first SIM card information that are sent by the WBAP, the method further includes: After the WBCPE sends the binding information of the SIM card information and the IMEI to the WBAP, the WBAC receives the binding information that is of the SIM card information and the IMEI and that is sent by the WBAP. The WBAC stores the binding information of the SIM card information and the IMEI. The WBAC may obtain the binding information of the valid IMEI and the valid SIM card information from the WBCPE, and store the binding information in the WBAC. The foregoing stored binding information of the IMEI and the SIM card information may be used as preset binding information in the machine-card verification method.

In another possible implementation, the method further includes: When determining that the first SIM card information does not match the WBCPE, the WBAC generates a verification failure message, and sends the verification failure message to the WBAP. The WBAP may reject the registration request of the WBCPE based on the verification failure message, so that the WBCPE cannot access the network by using a first SIM card.

According to a third aspect WBCPE is provided. The WBCPE has a function of implementing the machine-card verification method in any implementation of the first aspect. The function may be implemented by hardware, or may be implemented by hardware executing corresponding software. The hardware or the software includes one or more modules corresponding to the foregoing functions.

According to a fourth aspect, a WBAC is provided. The WBAC has a function of implementing the machine-card verification method in any implementation of the second aspect. The function may be implemented by hardware, or may be implemented by hardware executing corresponding software. The hardware or the software includes one or more modules corresponding to the foregoing functions.

According to a fifth aspect, a computer storage medium is provided. The computer-readable storage medium stores instructions. When the instructions are run on a computer, the computer performs the method according to the foregoing aspect.

According to a sixth aspect of this application, a computer program product including instructions is provided. When the instructions are run on a computer, the computer is enabled to perform the method in the foregoing aspect.

### BRIEF DESCRIPTION OF DRAWINGS

FIG. 1 is a schematic diagram of a simplified network according to this application;
FIG. 2 is a schematic diagram of signaling interaction of a machine-card verification method according to this application;
FIG. 3 is a schematic diagram of a structure of wireless wideband customer premises equipment according to this application;
FIG. 4 is a schematic diagram of a structure of a wireless wideband access point controller according to this application;
FIG. 5 is a schematic diagram of another structure of wireless wideband customer premises equipment according to this application; and
FIG. 6 is a schematic diagram of another structure of a wireless wideband access point controller according to this application.

### DESCRIPTION OF EMBODIMENTS

This application provides a machine-card verification method. The configured method can be applied to a simplified network in industry communication. The industry communication may be specifically but not limited to industrial communication or electrical network communication.

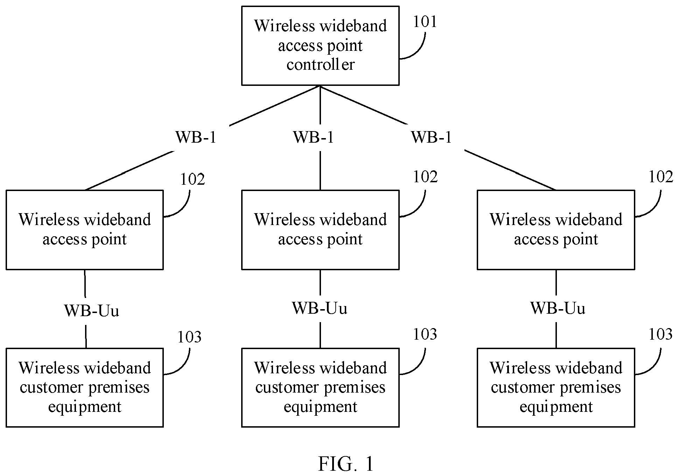

With reference to FIG. 1, the simplified network includes but is not limited to WBCPE 103, a WBAP 102, and a WBAC 101. Each WBAP 102 may be connected to one or more WBCPEs 103. Each WBAC 101 may be connected to one or more WBAPs 102. The WBCPE 103 and the WBAP 102 are connected through a WB-Uu interface. The WBAP 102 and the WBAC 101 are connected through a WB-1 interface. The WB-Uu interface uses the 3rd generation partnership project (3rd Generation Partnership Project, 3GPP) air interface standard. Specifically, the WBAP 102 and the WBAC 101 communicate with each other according to a control and provisioning of wireless access points protocol specification (control and provisioning of wireless access points protocol specification, CAPWAP). In other words, a protocol of the WB-1 interface is the CAPWAP protocol.

A non-access stratum (non-access stratum, NAS) message may be transmitted between the WBCPE 103 and the WBAP 102. The NAS message sent by the WBCPE 103 ends at the WBAP.

The WBAP 102 provides an access management function, an authentication and verification function, a mobility management function, and a session management function. The WBAP serves as an egress gateway for locally forwarded data to connect to an external PDN network. The WBAP may be alternatively considered as an anchor for implementing a data connection when the WBCPE moves. In addition to the NAS message, the WBAP is further used to end air interface signaling.

The WBAC 101 provides a subscriber subscription repository function, a subscriber subscription management function, a mobility management function, a policy control function, and a WBAP configuration management function. The WBAC serves as an egress gateway for centrally forwarded data to connect to an external PDN network. The WBAC also serves as another anchor for implementing a data connection when the WBCPE moves. The WBAC includes an online registration server and a home authentication, authorization, and accounting server (home authentication authorization and accounting server, HAAA).

To resolve a problem that the simplified network is lack of a machine-card verification mechanism, this application provides a machine-card verification method applied to the simplified network, to reduce a problem that a SIM card is stolen in the simplified network and improve security of the simplified network.

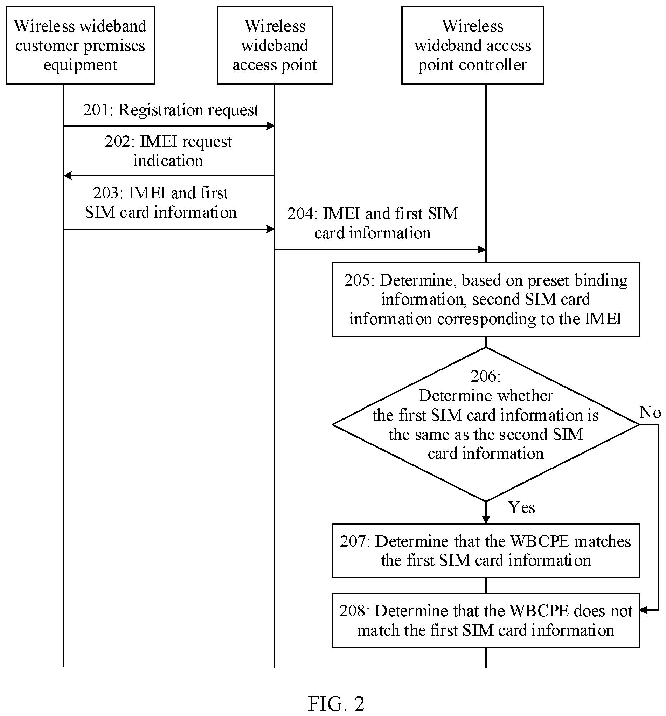

With reference to FIG. 2, an embodiment of the machine-card verification method provided in this application includes the following steps.

Step 201: WBCPE sends a registration request to a WBAP.

In this embodiment, when the WBCPE needs to access a network, the WBCPE sends the registration request to the WBAP.

Step 202: The WBCPE receives an international mobile equipment identity (international mobile equipment identity, IMEI) request indication sent by the WBAP.

After receiving the registration request sent by the WBCPE, the WBAP responds to the registration request, generates the IMEI request indication, and sends the IMEI request indication to the WBCPE. Optionally, the IMEI request indication is carried in a security mode command (security mode command, SMC).

Step 203: The WBCPE sends an IMEI and first SIM card information to the WBAP.

The first SIM card information is the SIM card information currently configured for the WBCPE. Optionally, both the IMEI and the first SIM card information are carried in a security mode complete (security mode complete) message.

Optionally, the SIM card information includes an international mobile subscriber identity (international mobile subscriber identity, IMSI), a network access identifier (network access identifier, NAI), or a certificate name. Alternatively, the SIM card information includes an IMSI and a certificate name. Alternatively, the SIM card information includes an IMSI and a NAI. Alternatively, the SIM card information includes a NAI and a certificate name. Alternatively, the SIM card information includes an IMSI, a NAI, and a certificate name.

Step 204: The WBAP sends the IMEI and the first SIM card information to a WBAC.

After receiving the IMEI and the first SIM card information, the WBAP sends the IMEI and the first SIM card information to the WBAC.

Step 205: The WBAC determines, based on preset binding information, second SIM card information corresponding to the IMEI.

The preset binding information includes a correspondence between the IMEI and SIM card information. The binding information may be an information combination including SIM card information and an IMEI, for example, {an IMSI, a NAI, an IMEI}. It may be understood that both the SIM card information and the IMEI are valid information.

Step 206: The WBAC determines whether the first SIM card information is the same as the second SIM card information; and if the first SIM card information is the same as the second SIM card information, performs step 207; or if the first SIM card information is different from the second SIM card information, performs step 208.

Step 207: The WBAC determines that the first SIM card information matches the WBCPE.

When the first SIM card information is the same as the second SIM card information, the WBAC determines that the first SIM card information matches the WBCPE. When the WBAC determines that the first SIM card information matches the WBCPE, the WBAC may further send a verification success message to the WBCPE through the WBAP.

Step 208: The WBAC determines that the first SIM card information does not match the WBCPE.

When the first SIM card information is different from the second SIM card information, the WBAC determines that the first SIM card information does not match the WBCPE. Optionally, when the WBAC determines that the first SIM card information does not match the WBCPE, the WBAC generates a verification failure message, and sends the verification failure message to the WBAP. The WBAP generates a registration reject message based on the verification failure message sent by the WBAC, and sends the registration reject message to the WBCPE. When the WBCPE receives the registration reject message sent by the WBAP, a user may learn that the WBCPE does not match a currently configured first SIM card.

In this embodiment, when the IMEI and the first SIM card information are inconsistent with the preset binding information, the WBAC determines that the WBCPE does not match the first SIM card information, which indicates that the first SIM card information is not valid SIM card information of the WBCPE. In this case, registration is rejected. In this way, the WBCPE cannot access the simplified network by using the first SIM card. Therefore, a risk that a SIM card is stolen can be reduced, and security of the simplified network can be improved.

In addition, because the SIM card information includes one or more of the IMSI, the NAI, and the certificate name, verification can succeed only when an IMSI, a NAI, and a certificate name in the first SIM card information are all consistent with an IMSI, a NAI, and a certificate name in the second SIM card information. In comparison with IMSI verification, the SIM card information that needs to be verified in this application is more comprehensive, so that verification reliability can be improved.

Before registration of the WBCPE, the WBCPE communicates with the WBAC through the WBAP to perform an online subscription process. In the online subscription process, the WBCPE obtains subscription information from the WBAC. In addition, the WBCPE and the WBAC may implement bidirectional authentication based on the IMEI and a key.

In an optional embodiment, before the WBCPE sends the registration request to the WBAP, the machine-card verification method further includes: The WBCPE binds the preconfigured SIM card information to the IMEI. The WBCPE sends the binding information of the SIM card information and the IMEI to the WBAC through the WBAP, and the WBAC stores the binding information of the SIM card information and the IMEI.

In this embodiment, before verifying the IMEI and the first SIM card information, the WBAC may obtain, from the WBCPE, the binding information of the valid IMEI and the valid SIM card information, and store the binding information in the WBAC. Specifically, the binding information may be stored in the HAAA.

Alternatively, before step 201, the WBAC may obtain the valid SIM card information and the valid IMEI from the WBCPE, and then bind the valid IMEI to the valid SIM card information.

In an optional embodiment, after step 201, before step 202, the machine-card verification method further includes:

The WBCPE, the WBAP, and the WBAC negotiate an authentication manner.

After the authentication manner negotiation is completed, the WBCPE and the WBAP determine an encryption algorithm, and then use the encryption algorithm to encrypt signaling (such as an SMC message) between the WBCPE and the WBAP. In this way, security of signaling transmission between the WBCPE and the WBAP can be improved.

It should be noted that a function executed by the WBAC may be completed by the HAAA in the foregoing embodiment.

The foregoing describes the machine-card verification method in this application, and the following describes an apparatus for implementing the foregoing machine-card verification method in this application.

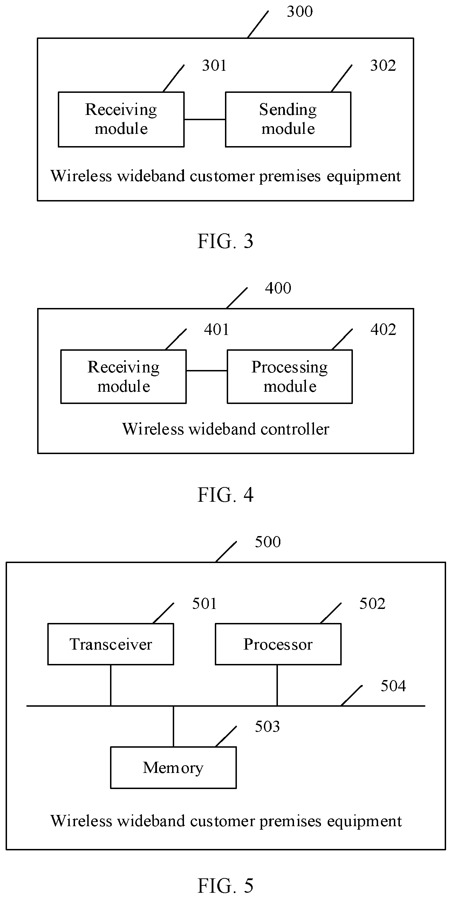

Refer to FIG. 3. This application provides WBCPE 300. The WBCPE 300 can implement a function of the WBCPE in the embodiments or the optional embodiments shown in FIG. 2. In an embodiment, the WBCPE 300 includes:
a sending module 301, configured to send a registration request to a WBAP; and
a receiving module 302, configured to receive an IMEI request indication sent by the WBAP, where
the sending module 301 is further configured to send an IMEI and first SIM card information to a WBAC through the WBAP, where the first SIM card information includes at least one of the following information: an IMSI, a NAI, and a certificate name, so that the WBAC verifies the IMEI and the first SIM card information based on preset binding information.

In an optional embodiment,
a processing module is configured to: before the sending module sends the registration request to the WBAP, bind preconfigured SIM card information to the IMEI, where
the sending module 301 is further configured to send the binding information of the SIM card information and the IMEI to the WBAC through the WBAP, so that the WBAC stores the binding information of the SIM card information and the IMEI.

In another optional embodiment,
the receiving module 302 is further configured to receive a registration reject message sent by the WBAP, where the registration reject message is generated by the WBAP based on a verification failure message sent by the WBAC.

In another optional embodiment, the IMEI request indication is carried in a security mode command, and the IMEI and the first SIM card information are both carried in a security mode complete message.

This application provides a WBAP. The WBAP can implement a function of the WBAP in the embodiments or the optional embodiments shown in FIG. 2.

In an embodiment, the WBAP includes:
a receiving module, configured to receive a registration request sent by WBCPE;
a processing module, configured to generate an IMEI request indication based on the registration request; and
a sending module, configured to send the IMEI request indication to the WBCPE, where
the receiving module is further configured to receive an IMEI and first SIM card information that are sent by the WBCPE; and
the sending module is further configured to send the IMEI and the first SIM card information to a WBAC, so that the WBAC verifies the IMEI and the first SIM card information based on preset binding information.

In an optional embodiment,
the receiving module is further configured to receive the binding information that is of the SIM card information and the IMEI and that is sent by the WBCPE; and
the sending module is further configured to send the binding information of the SIM card information and the IMEI to the WBAC.

In another optional embodiment,
the receiving module is further configured to receive a verification failure message sent by the WBAC;
the processing module is further configured to generate a registration reject message based on the verification failure message; and
the sending module is configured to send the registration reject message to the WBCPE.

This application provides a WBAC. The WBAC can implement a function of the WBAC in the embodiments or the optional embodiments shown in FIG. 2. Refer to FIG. 4. In an embodiment, the WBAC 400 includes:
a receiving module 401, configured to receive an IMEI and first SIM card information that are sent by a WBAP, where the IMEI and the first SIM card information are sent by wireless wideband customer premises equipment WBCPE to the WBAP, and the first SIM card information includes at least one of the following information: an IMSI, a NAI, and a certificate name; and
a processing module 402, configured to determine, based on preset binding information, second SIM card information corresponding to the IMEI, where the preset binding information includes a correspondence between SIM card information and the IMEI, where
the processing module 402 is further configured to: when the first SIM card information is the same as the second SIM card information, determine that the first SIM card information matches the WBCPE; or when the first SIM card information is different from the second SIM card information, determine that the first SIM card information does not match the WBCPE.

In an optional embodiment,
the receiving module 401 is further configured to: before the receiving module receives the IMEI and the first SIM card information that are sent by the WBAP, receive the binding information that is of the SIM card information and the IMEI and that is sent by the WBAP, where the binding information of the SIM card information and the IMEI is sent by the WBCPE to the WBAP; and
the WBAC 400 further includes:
   a storage module, configured to store the binding information of the SIM card information and the IMEI.

In another optional embodiment,
the processing module 402 is further configured to: when the WBAC determines that the first SIM card information does not match the WBCPE, generate a verification failure message; and
the WBAC 400 further includes a sending module, configured to send the verification failure message to the WBAP.

Refer to FIG. 5. Another embodiment of a WBCPE 500 provided in this application includes:
a transceiver 501, a processor 502, and a memory 503, where the transceiver 501, the processor 502, and the memory 503 are connected by using a bus 504.

The transceiver 501 is configured to communicate with another device through wireless communication. For example, the transceiver 501 receives downlink information of a WBAP and sends the downlink information to the processor 502 for processing, or sends uplink data to a WBAP. The transceiver 501 includes but is not limited to an antenna, an amplifier, a transceiver, a coupler, a low noise amplifier (Low Noise Amplifier, LNA), a duplexer, and the like. A Wi-Fi protocol may be used for wireless communication.

The processor 502 may include one or more processing units. Preferably, the processor 502 may integrate an application processor and a modem processor. The application processor mainly processes an operating system, a user interface, an application program, and the like. The modem processor mainly processes wireless communication. It may be understood that the modem processor may alternatively not be integrated into the processor 502.

The memory 503 may include a high-speed random access memory, and may further include a nonvolatile memory, for example, at least one magnetic disk storage device, a flash memory, or another volatile solid-state storage device.

By invoking a program or instructions stored in the memory 503, the processor 502 is configured to perform a function of the WBCPE in the embodiments or the optional embodiments shown in FIG. 2.

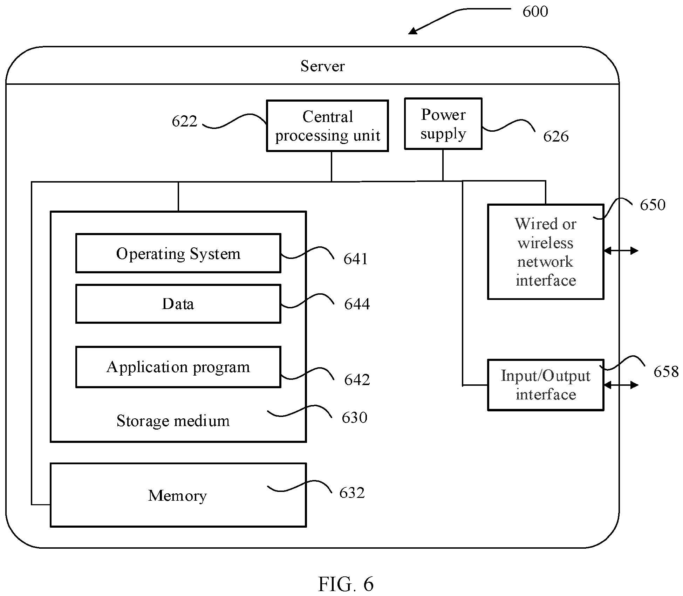

FIG. 6 is a schematic diagram of a structure of a server according to an embodiment of this application. The server 600 may vary greatly with different configurations or performance, and may include one or more central processing units (central processing units, CPUs) 622 (for example, one or more processors), a memory 632, one or more storage media 630 (for example, one or more mass storage devices) that store an application program 642 or data 644. The memory 632 and the storage medium 630 may perform transitory storage or persistent storage. The program stored in the storage medium 630 may include one or more modules (not shown in the figure), and each module may include a series of instruction operations for the server. Still further, the central processing unit 622 may be configured to: communicate with the storage medium 630, and perform, on the server 600, the series of instruction operations in the storage medium 630.

The server 600 may further include one or more power supplies 626, one or more wired or wireless network interfaces 650, one or more input/output interfaces 658, and/or one or more operating systems 641 such as Windows ServerTM, Mac OS XTM, UnixTM, LinuxTM, and FreeBSDTM

In the foregoing embodiment, the steps performed by the WBAC may be based on the structure of the server shown in FIG. 6.

This application provides a computer-readable storage medium, including instructions. When the instructions are run on a computer, the computer is enabled to perform the method provided in any one of the foregoing embodiments.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of the embodiments of this application.

## Claims

1. A machine-card verification method applied to a simplified network, comprising:
sending, by wireless wideband customer premises equipment WBCPE, a registration request to a wireless wideband access point WBAP;
receiving, by the WBCPE, an international mobile equipment identity IMEI request indication sent by the WBAP, wherein the IMEI request indication is generated by the WBAP based on the registration request; and
sending, by the WBCPE, an IMEI and first SIM card information to a WBAC through the WBAP, wherein the first SIM card information comprises at least one of the following information: an international mobile subscriber identity, a network access identifier, and a certificate name, so that the WBAC verifies the IMEI and the first SIM card information based on preset binding information.

2. The method according to claim 1, wherein before the sending, by WBCPE, a registration request to a WBAP, the method further comprises:
binding, by the WBCPE, preconfigured SIM card information to the IMEI; and
sending, by the WBCPE, the binding information of the SIM card information and the IMEI to the WBAC through the WBAP, so that the WBAC stores the binding information of the SIM card information and the IMEI.

3. The method according to claim 1 or 2, wherein the method further comprises:
receiving, by the WBCPE, a registration reject message sent by the WBAP, wherein the registration reject message is generated by the WBAP based on a verification failure message sent by the WBAC.

4. The method according to claim 1 or 2, wherein the IMEI request indication is carried in a security mode command, and the IMEI and the first SIM card information are both carried in a security mode complete message.

5. A machine-card verification method applied to a simplified network, comprising:
receiving, by a wireless wideband access point controller WBAC, an IMEI and first SIM card information that are sent by a wireless wideband access point WBAP, wherein the IMEI and the first SIM card information are sent by wireless wideband customer premises equipment WBCPE to the WBAP, and the first SIM card information comprises at least one of the following information: an international mobile subscriber identity, a network access identifier, and a certificate name;
determining, by the WBAC based on preset binding information, second SIM card information corresponding to the IMEI, wherein the preset binding information comprises a correspondence between SIM card information and the IMEI; and
when the first SIM card information is the same as the second SIM card information, determining, by the WBAC, that the first SIM card information matches the WBCPE; or
when the first SIM card information is different from the second SIM card information, determining, by the WBAC, that the first SIM card information does not match the WBCPE.

6. The method according to claim 5, wherein before the receiving, by a WBAC, an IMEI and first SIM card information that are sent by a WBAP, the method further comprises:
receiving, by the WBAC, the binding information that is of the SIM card information and the IMEI and that is sent by the WBAP, wherein the binding information of the SIM card information and the IMEI is sent by the WBCPE to the WBAP; and
storing, by the WBAC, the binding information of the SIM card information and the IMEI.

7. The method according to claim 5 or 6, wherein the method further comprises:
when determining that the first SIM card information does not match the WBCPE, generating, by the WBAC, a verification failure message; and
sending, by the WBAC, the verification failure message to the WBAP.

8. Wireless wideband customer premises equipment WBCPE, comprising:
a sending module, configured to send a registration request to a wireless wideband access point WBAP; and
a receiving module, configured to receive an international mobile equipment identity IMEI request indication sent by the WBAP, wherein
the sending module is further configured to send an IMEI and first SIM card information to a WBAC through the WBAP, wherein the first SIM card information comprises at least one of the following information: an international mobile subscriber identity, a network access identifier, and a certificate name, so that the WBAC verifies the IMEI and the first SIM card information based on preset binding information.

9. The WBCPE according to claim 8, wherein the WBCPE further comprises:
a processing module, configured to: before the sending module sends the registration request to the WBAP, bind preconfigured SIM card information to the IMEI, wherein
the sending module is further configured to send the binding information of the SIM card information and the IMEI to the WBAC through the WBAP, so that the WBAC stores the binding information of the SIM card information and the IMEI.

10. The WBCPE according to claim 8 or 9, wherein
the receiving module is further configured to receive a registration reject message sent by the WBAP, wherein the registration reject message is generated by the WBAP based on a verification failure message sent by the WBAC.

11. The WBCPE according to claim 8 or 9, wherein the IMEI request indication is carried in a security mode command, and the IMEI and the first SIM card information are both carried in a security mode complete message.

12. A wireless wideband access point controller WBAC, comprising:
a receiving module, configured to receive an IMEI and first SIM card information that are sent by a wireless wideband access point WBAP, wherein the IMEI and the first SIM card information are sent by wireless wideband customer premises equipment WBCPE to the WBAP, and the first SIM card information comprises an international mobile subscriber identity and at least one of the following information: a network access identifier and a certificate name; and
a processing module, configured to determine, based on preset binding information, second SIM card information corresponding to the IMEI, wherein the preset binding information comprises a correspondence between SIM card information and the IMEI, wherein
the processing module is further configured to: when the first SIM card information is the same as the second SIM card information, determine that the first SIM card information matches the WBCPE; or when the first SIM card information is different from the second SIM card information, determine that the first SIM card information does not match the WBCPE.

13. The WBAC according to claim 12, wherein
the receiving module is further configured to: before the receiving module receives the IMEI and the first SIM card information that are sent by the WBAP, receive the binding information that is of the SIM card information and the IMEI and that is sent by the WBAP, wherein the binding information of the SIM card information and the IMEI is sent by the WBCPE to the WBAP; and
the WBAC further comprises:
a storage module, configured to store the binding information of the SIM card information and the IMEI.

14. The WBAC according to claim 12 or 13, wherein
the processing module is further configured to: when the processing module determines that the first SIM card information does not match the WBCPE, generate a verification failure message; and
the WBAC further comprises:
a sending module, configured to send the verification failure message to the WBAP.

15. A computer storage medium, comprising instructions, wherein when the instructions are run on a computer, the computer is enabled to perform the method according to any one of claims 1 to 7.
